# EUROPEAN PATENT APPLICATION

(11) **EP 4 376 180 A1**
(43) Date of publication of application: **29.05.2024**
(21) Application number: 21960943.5
(22) Date of filing: 20.10.2021
(51) Int. Cl.: H01M 50/188

(54) **BATTERY CELL, BATTERY, POWER CONSUMING DEVICE, AND METHOD AND APPARATUS FOR MANUFACTURING BATTERY CELL**

(71) Applicant: Contemporary Amperex Technology Co., Limited, Jiaocheng District Ningde Fujian 352100 (CN)
(72) Inventor: FANG, Kun, Ningde, Fujian 352000 (CN); GUO, Zhijun, Ningde, Fujian 352000 (CN)
(74) Representative: Ziebig Hengelhaupt Intellectual Property Attorneys Patentanwaltskanzlei PartGmbB
(86) International application number: PCT/CN2021/125113
(87) International publication number: WO 2023/065192

(57) **Abstract**

This application relates to a battery cell, a battery, an electric apparatus, and a manufacturing method and device of battery cell, and relates to the field of batteries. This application provides a battery cell. The battery cell includes: a housing including a wall portion; an electrode terminal mounted on the wall portion in an insulating manner; an electrode assembly disposed in the housing, where the electrode assembly includes a body and a first tab, the first tab being formed at an end of the body closer to the wall portion; a current collecting member disposed between the electrode assembly and the wall portion, where the current collecting member is configured to connect the first tab to the electrode terminal; and a heat shrink film, at least a portion of the heat shrink film covering a side of the current collecting member facing the wall portion to insulate and isolate the current collecting member from the wall portion. The battery cell of this application has high safety.

## Description

### TECHNICAL FIELD

This application relates to the field of battery technologies, and in particular, to a battery cell, a battery, an electric apparatus, and a manufacturing method and device of battery cell.

### BACKGROUND

Energy saving and emission reduction are crucial to the sustainable development of the automobile industry. Electric vehicles, with their advantages in energy conservation and environment protection, have become an important part of sustainable development of the automobile industry. For electric vehicles, battery technologies are an important factor in connection with their development.

In the development of battery technologies, safety is another non-negligible issue in addition to improving battery performance. If the safety of a battery cannot be guaranteed, the battery cannot be used. Therefore, how safety performance of batteries is enhanced is an urgent technical problem that needs to be solved in battery technology.

### SUMMARY

This application is intended to provide a battery cell, a battery, an electric apparatus, and a manufacturing method and device of battery cell. The battery cell has high safety.

According to a first aspect, this application provides a battery cell including: a housing that includes a wall portion; an electrode terminal mounted on the wall portion in an insulating manner; an electrode assembly disposed in the housing, where the electrode assembly includes a body and a first tab, the first tab being formed at an end of the body closer to the wall portion; a current collecting member disposed between the first tab and the wall portion and configured to connect the first tab to the electrode terminal; and a first insulating member disposed between the current collecting member and the wall portion for insulating and isolating the current collecting member from the wall portion; where a protrusion is formed on a side of the first insulating member facing the current collecting member, and in a thickness direction of the wall portion, a projection of the protrusion on the current collecting member does not overlap a projection of the electrode terminal on the current collecting member.

In the battery cell of this application, with the protrusion formed on the side of the first insulating member facing the current collecting member, the protrusion can limit warping of the current collecting member toward the wall portion during a process of placing the electrode assembly into the housing, thereby limiting the deformation of the electrode assembly toward the wall portion to prevent a short circuit and thermal runaway in the battery cell caused by misalignment of the electrode plate of the electrode assembly and improving the safety of the battery cell.

In some embodiments of this application, the current collecting member includes a central portion and a peripheral portion, the projection of the electrode terminal on the current collecting member is located in the central portion, and the projection of the protrusion on the current collecting member is located in the peripheral portion.

In the foregoing solution, during the process of placing the electrode assembly into the housing, the electrode terminal abuts against the central portion and the protrusion can abut against the peripheral portion to limit and support the peripheral portion and restrict the peripheral portion from warping toward the wall portion, thereby limiting misalignment of the electrode plate in an outer circle of the electrode assembly to prevent a short circuit and thermal runaway in the battery cell and improving the safety of the battery cell.

In some embodiments of this application, in a radial direction of the electrode terminal, a minimum distance from the protrusion to an outer peripheral surface of the current collecting member is less than a minimum distance from the protrusion to an outer peripheral surface of the electrode terminal.

In the foregoing solution, the electrode plate in the outer circle of the electrode assembly has a high probability of misalignment and a large amount of misalignment, the protrusion being disposed closer to the outer peripheral surface of the current collecting member and farther away from the outer peripheral surface of the electrode terminal enables the protrusion to limit and support the electrode plate farther away from the electrode terminal, that is, the electrode plate in the outer circle, reduces the probability of misalignment of the electrode plate in the outer circle, prevents a short circuit and thermal runaway in the battery cell caused by misalignment of the electrode plate in the outer circle, and improves the safety of the battery cell.

In some embodiments of this application, a gap is present between the protrusion and the current collecting member in the thickness direction of the wall portion.

In the foregoing solution, the electrode terminal needs to abut against the current collecting member for electrical connection, so provision of a gap between the protrusion and the current collecting member can prevent the protrusion from interfering with the connection between the electrode terminal and the current collecting member, ensuring the stability of the electrical connection between the electrode terminal and the current collecting member.

In some embodiments of this application, the protrusion is an annular protrusion disposed around the central axis of the electrode terminal; or the protrusions are provided in plurality and the plurality of protrusions are spaced apart around the central axis of the electrode terminal.

In the foregoing solution, the annular protrusion plays the roles of limiting and supporting the electrode plate and separator in the outer circle of the electrode assembly relatively uniformly, and the problem of misalignment of the electrode plate at a local position is not likely to occur. The manner in which the plurality of protrusions are spaced apart around the central axis of the electrode terminal reduces the material used for the first insulating member and reduces the difficulty of forming the first insulating member.

In some embodiments of this application, the battery cell further includes an insulating film, the insulating film covering outer peripheral surfaces of the first tab and the body and extending between the protrusions and the current collecting member.

In the foregoing solution, with the insulating film covering outer peripheral surfaces of the first tab and the body, the insulating film insulates and isolates the first tab and the body from the housing, reducing the probability of short circuit between the first tab and the housing and between the body and the housing, thereby reducing the risk of short circuit in the battery cell and improving the safety of the battery cell. In addition, the insulating film extends between the protrusion and the current collecting member so that the protrusion and the current collecting member can compress the insulating film to prevent the insulating film from moving uncontrollably, improving the stability of the insulating film covering the current collecting member, the first tab, and the body.

In some embodiments of this application, the housing includes a housing and an end cover, where the housing includes a bottom wall and a side wall, the side wall encloses around the bottom wall, one end of the side wall is connected to the bottom wall, the other end of the side wall encloses an opening opposite the bottom wall, the end cover covers the opening, and the wall portion is the bottom wall or the end cover.

In the foregoing solution, the bottom wall and the side wall define a space for accommodation of the electrode assembly, electrolyte, and other structures, and the end cover is used to cover the opening enclosed by the side wall, ensuring the sealing of the housing.

In some embodiments of this application, the electrode assembly further includes a second tab, where the second tab is formed at an end of the body farther away from the wall portion, the second tab and the first tab have opposite polarities, and the second tab is electrically connected to the wall portion.

In the foregoing solution, the first tab and the second tab are located at two ends of the electrode assembly, and good insulation is provided between the first tab and the second tab, reducing the risk of short circuit in the battery cell and improving the safety of the battery cell.

According to a second aspect, this application provides a battery including the foregoing battery cell.

According to a third aspect, this application provides an electric apparatus including the foregoing battery, where the battery is configured to supply electrical energy.

According to a fourth aspect, this application provides a manufacturing method of battery cell including: providing a housing and an electrode terminal, where the housing includes a wall portion, and the electrode terminal is mounted on the wall portion in an insulating manner; providing an electrode assembly, where the electrode assembly includes a body and a first tab, the first tab being formed at an end of the body closer to the wall portion; providing a current collecting member; providing a first insulating member, where a protrusion is formed on a side of the first insulating member facing the current collecting member, and in a thickness direction of the wall portion, a projection of the protrusion on the current collecting member does not overlap a projection of the electrode terminal on the current collecting member; and connecting the current collecting member to the first tab, disposing the first insulating member on the wall portion with the protrusion facing away from the wall portion, placing the electrode assembly into the housing, and connecting the current collecting member to the electrode terminal.

According to a fifth aspect, this application provides a manufacturing device of battery cell including: a first providing means configured to provide a housing and an electrode terminal, where the housing includes a wall portion, and the electrode terminal is mounted on the wall portion in an insulating manner; a second providing means configured to provide an electrode assembly, where the electrode assembly includes a body and a first tab, the first tab being formed at an end of the body closer to the wall portion; a third providing means configured to provide a current collecting member; a fourth providing means configured to provide a first insulating member, where a protrusion is formed on a side of the first insulating member facing the current collecting member, and in a thickness direction of the wall portion, a projection of the protrusion on the current collecting member does not overlap a projection of the electrode terminal on the current collecting member; and an assembly means configured to connect the current collecting member to the first tab, dispose the first insulating member on the wall portion with the protrusion facing away from the wall portion, place the electrode assembly into the housing, and connect the current collecting member to the electrode terminal.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 a schematic diagram of a vehicle according to an embodiment of this application;
FIG. 2 is a schematic structural diagram of a battery according to an embodiment of this application;
FIG. 3 is an exploded view of a battery cell according to an embodiment of this application;
FIG. 4 is a cross-sectional view of a battery cell according to an embodiment of this application;
FIG. 5 is a locally enlarged view of position A of a battery cell according to an embodiment of this application;
FIG. 6 is a schematic diagram of a first insulating member with an annular protrusion formed according to an embodiment of this application;
FIG. 7 is a schematic diagram of a first insulating member with a plurality of protrusions formed according to an embodiment of this application;
FIG. 8 is a schematic diagram of an insulating film covering outer peripheral surfaces of a first tab and a body according to an embodiment of this application;
FIG. 9 is a locally enlarged view of position B according to an embodiment of this application;
FIG. 10 is a schematic diagram of a battery cell according to an embodiment of this application;
FIG. 11 is a schematic diagram of a manufacturing method of battery cell according to example 4 of this application; and
FIG. 12 is a schematic diagram of a manufacturing device of battery cell according to example 5 of this application.

The accompanying drawings are not drawn to scale.

Description of reference signs: 10. battery cell; 11. housing; 11a. wall portion; 111. housing body; 1111. bottom wall; 1112. side wall; 112. end cover; 12. electrode terminal; 13. electrode assembly; 131. first tab; 132. body; 133. second tab; 14. current collecting member; 141. central portion; 142. peripheral portion; 15. first insulating member; 151. protrusion; 16. insulating film; 17. second insulating member; 20. box; 21. first sub-box; 22. second sub-box; 100. battery; 200. controller; 300. motor; 1000. vehicle; 2000. manufacturing device of battery cell; 2100. first providing means; 2200. second providing means; 2300. third providing means; 2400. fourth providing means; 2500. first assembly means; 2600. second assembly means; 2700. third assembly means; 2800. fourth assembly means.

### DESCRIPTION OF EMBODIMENTS

The following further describes the implementations of this application in detail with reference to the accompanying drawings and embodiments. The following detailed description of embodiments and the accompanying drawings are intended to illustrate the principle of this application rather than to limit the scope of this application, meaning this application is not limited to the embodiments described herein.

In the description of this application, it should be noted that, unless otherwise stated, "a plurality of" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all are directions shown in the figures, and do not limit the specific structure of the application. In the description of this application, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

The battery mentioned in this application is a single physical module that includes one or more battery cells for providing a higher voltage and capacity. For example, the battery mentioned in this application may include a battery module, a battery pack, or the like.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. A positive electrode current collector uncoated with the positive electrode active substance layer protrudes out of a positive electrode current collector coated with the positive electrode active substance layer and serves as a positive electrode tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. A negative electrode current collector uncoated with the negative electrode active substance layer protrudes out of a negative electrode current collector coated with the negative electrode active substance layer and serves as a negative electrode tab. The negative electrode current collector may be made of copper, and the negative electrode active substance may be carbon, silicon, or the like. To allow a large current to pass through without any fusing, multiple positive electrode tabs are provided and stacked together, and multiple negative electrode tabs are provided and stacked together. The separator may be made of PP (Polypropylene, polypropylene), PE (Polyethylene, polyethylene), or the like.

Currently, from a perspective of market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for the traction batteries are also expanding.

The inventors have noted that during a process of placing an electrode assembly into a housing, it is required to apply a force to the electrode assembly in the axial direction of the electrode assembly so that the current collecting member (connected to one end of the electrode assembly) abuts against the electrode terminal. Since diameters of the current collecting member and the electrode assembly are larger than the diameter of the electrode terminal, the electrode terminal can only limit and support the current collecting member and the electrode assembly at a part where the two abut against the electrode terminal, but the rest part of the current collecting member and the electrode assembly cannot be effectively limited and supported.

For a wound electrode assembly, the electrode terminal cannot limit and support the electrode plate and the separator in the outer circle of the electrode assembly (a part of the electrode plate and the separator, with projections thereof on the current collecting member not overlapping a projection of the electrode terminal on the current collecting member). Therefore, when the electrode assembly is placed into the housing, the current collecting member may warp, resulting in misalignment of the electrode plate in the outer circle. The misalignment of the electrode plate may cause short circuit in the battery cell and trigger thermal runaway, which is a great safety hazard and seriously affects the safety of the battery.

In view of the foregoing considerations, to reduce the probability of electrode plate misalignment during the process of placing the electrode assembly into the housing, the inventors have designed a battery cell through in-depth research. The battery cell includes a housing, where the housing includes a wall portion (located at one end of the housing), a first insulating member is disposed between a current collecting member and the wall portion and with a protrusion formed on a side of the first insulating member facing the current collecting member, and in the thickness direction of the wall portion, a projection of the protrusion on the current collecting member does not overlap a projection of the electrode terminal on the current collecting member.

In such a battery cell, with the protrusion formed on the side of the first insulating member facing the current collecting member, the protrusion can limit warping of the current collecting member toward the wall portion to some extent during a process of placing the electrode assembly into the housing, thereby limiting the deformation of the electrode assembly toward the wall portion to prevent a short circuit and thermal runaway in the battery cell caused by misalignment of the electrode plate of the electrode assembly and improving the safety of the battery cell.

An embodiment of this application provides an electric apparatus that uses a battery as a power source. The electric apparatus may be but is not limited to a mobile phone, a tablet, a laptop computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle is used as an example for description of the following embodiments.

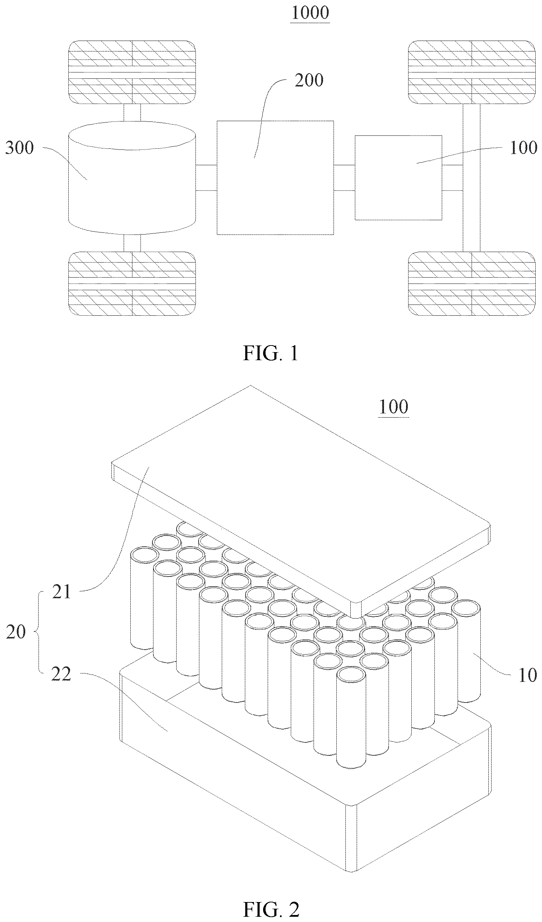

As shown in FIG. 1, FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

As shown in FIG. 2, FIG. 2 is a schematic structural diagram of a battery 100 according to some embodiments of this application. The battery 100 includes a box 20 and battery cells 10, where the battery cells 10 is accommodated in the box 20. The box 20 is configured to provide an accommodating space for the battery cell 10. The box 20 may be a variety of structures. In some embodiments, the box 20 may include a first sub-box 21 and a second sub-box 22. The first sub-box 21 and the second sub-box 22 fit together to jointly define a space for accommodating the battery cells 10. The second sub-box 22 may be a hollow structure with one end open, and the first sub-box 21 may be a plate structure, where the first sub-box 21 covers the open side of the second sub-box 22 so that the first sub-box 21 and the second sub-box 22 jointly define an accommodating space. Alternatively, the first sub-box 21 and the second sub-box 22 may both be hollow structure with one side open, and the open side of the first sub-box 21 covers the open side of the second sub-box 22. Certainly, the box 20 formed by the first sub-box 21 and the second sub-box 22 may be of various shapes, for example, a cylinder and a cuboid.

In the battery 100, the battery cell 10 may be present in plurality, and the plurality of battery cells 10 may be connected in series, parallel, or series-parallel, where being connected in series-parallel means a combination of series and parallel connections of the plurality of battery cells 10. The plurality of battery cells 10 may be directly connected in series, parallel, or series-parallel, and then a whole formed by the plurality of battery cells 10 is accommodated in the box 20. Certainly, the battery 100 may be formed by a plurality of battery cells 10 being connected in series, parallel, or series-parallel first to form a battery module, and then a plurality of battery modules are connected in series, parallel, or series-parallel to form a whole and are accommodated in the box 20. The battery 100 may further include other structures. For example, the battery 100 may further include a busbar configured to implement electrical connection between the plurality of battery cells 10.

Each battery cell 10 may be a secondary battery or a primary battery, and may be a lithium-sulfur battery, a sodium-ion battery, or a magnesium-ion battery, without being limited thereto. The battery cell 10 may be cylindrical, flat, cuboid, or of other shapes.

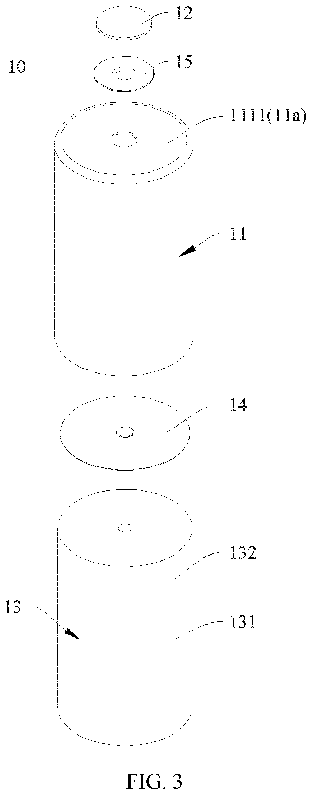

As shown in FIG. 3, FIG. 3 is an exploded view of a battery cell 10 according to some embodiments of this application. The battery cell 10 refers to a smallest element constituting the battery 100. As shown in FIG. 3, the battery cell 10 includes a housing 11, an electrode assembly 13, and other functional components.

The housing 11 is a component for forming an internal environment of the battery cells 10, where the internal environment formed by the housing 11 may be configured to accommodate the electrode assembly 13, an electrolyte, and other components. The housing 11 may be of various shapes and various sizes, such as a cylindrical shape, a rectangular shape, and a hexagonal prism shape. Specifically, the shape of the housing 11 may be determined according to a specific shape and size of the electrode assembly 13. The housing 11 may be made of various materials, for example, copper, iron, aluminum, stainless steel, and aluminum alloy.

The electrode assembly 13 is a component in which electrochemical reactions occur in the battery cell 10. The housing 11 may include one or more electrode assemblies 13. The electrode assembly 13 is mainly formed by winding or stacking a positive electrode plate and a negative electrode plate, and a separator is generally provided between the positive electrode plate and the negative electrode plate. Portions of the positive electrode plate and the negative electrode plate with active substances constitute a body 132 of the electrode assembly 13, while portions of the positive electrode plate and the negative electrode plate without active substances each constitute a tab. A positive electrode tab and a negative electrode tab may both be located at one end of the body 132 or be located at two ends of the body 132 respectively. During charge and discharge of the battery 100, a positive electrode active substance and a negative electrode active substance react with an electrolyte, and the tabs are connected to electrode terminals 12 to form a current loop.

As shown in FIG. 3, this application provides a battery cell 10. The battery cell 10 includes a housing 11, an electrode terminal 12, an electrode assembly 13, a current collecting member 14, and a first insulating member 15.

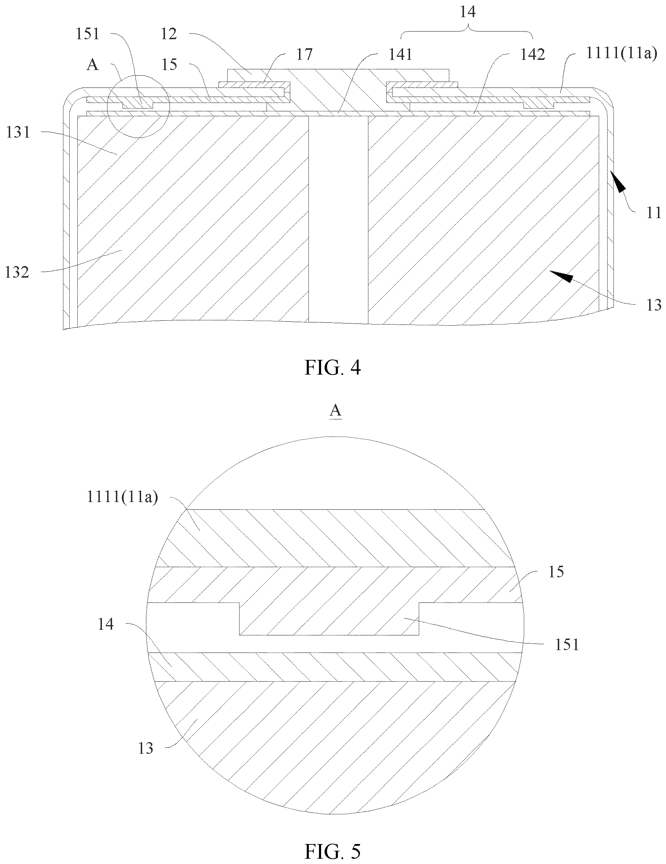

As shown in FIG. 4, FIG. 4 is a cross-sectional view of a battery cell according to some embodiments of this application. The housing 11 includes a wall portion 11a, and the electrode terminal 12 is mounted on the wall portion 11a in an insulating manner. The electrode assembly 13 is disposed in the housing 11. The electrode assembly 13 includes a body 132 and a first tab 131, the first tab 131 being formed at an end of the body 132 closer to the wall portion 11a. The current collecting member 14 is disposed between the electrode assembly 13 and the wall portion 11a. The current collecting member 14 is configured to connect the first tab 131 to the electrode terminal 12. The first insulating member 15 is disposed between the current collecting member 14 and the wall portion 11a and is configured to insulate and isolate the current collecting member 14 from the wall portion 11a. A protrusion 151 is formed on a side of the first insulating member 15 facing the current collecting member 14, and in the thickness direction of the wall portion 11a, a projection of the protrusion 151 on the current collecting member 14 does not overlap a projection of the electrode terminal 12 on the current collecting member 14.

To reduce the risk of short circuit in the battery cell 10, components with different polarities in the battery cell 10 should be insulated and isolated from each other. For example, insulation and isolation should be provided between the electrode terminal 12 and the wall portion 11a, between the current collecting member 14 and the wall portion 11a, and between the first tab 131 and the housing 11.

As shown in FIG. 4, the first insulating member 15 is disposed between the current collecting member 14 and the wall portion 11a to insulate and isolate the current collecting member 14 from the wall portion 11a.

The electrode terminal 12 being mounted on the wall portion 11a in an insulating manner can be understood as that an insulating structure is also provided between the electrode terminal 12 and the wall portion 11a to insulate and isolate the electrode terminal 12 from the wall portion 11a.

For example, in some embodiments of this application, the first insulating member 15 may extend between the electrode terminal 12 and the wall portion 11a to insulate and isolate the electrode terminal 12 from the wall portion 11a.

For another example, as shown in FIG. 4, in some other embodiments of this application, the battery cell 10 may further include a second insulating member 17. The second insulating member 17 is disposed between the electrode terminal 12 and the wall portion 11a to insulate and isolate the electrode terminal 12 from the wall portion 11a, and the first insulating member 15 is disposed between the current collecting member 14 and the wall portion 11a to insulate and isolate the current collecting member 14 from the wall portion 11a.

In an embodiment in which the battery cell 10 may further include the second insulating member 17, the first insulating member 15 and the second insulating member 17 may be integrally formed. Such an arrangement reduces the number of parts, makes the structure of the battery cell 10 compact, and facilitates the mounting and positioning of the first insulating member 15 and the second insulating member 17, thereby simplifying the assembly process of the battery cell 10 and improving the production efficiency of the battery cell 10. In some other embodiments of this application, the first insulating member 15 and the second insulating member 17 may alternatively be provided separately.

The first insulating member 15 and the second insulating member 17 may be made of plastic, for example, PVC (Polyvinyl Chloride, polyvinyl chloride) or PP (Polypropylene, polypropylene). Alternatively, the first insulating member 15 may be made of rubber, for example, butyl rubber, styrene-butadiene rubber, or silicone rubber.

The electrode assembly 13 further includes a second tab 133, and the second tab 133 and the first tab 131 have opposite polarities. The electrode assembly 13 is formed by winding electrode plates and a separator. Specifically, the electrode plates include a positive electrode plate and a negative electrode plate, and the positive electrode plate and the negative electrode plate are separated by the separator. The portions of the positive electrode plate and the negative electrode plate with an active substance constitute the body 132, and the portions of the positive electrode plate and the negative electrode plate without the active substance are configured to form a positive electrode tab and a negative electrode tab respectively. For example, the first tab 131 may be a positive electrode tab formed by the portion of the positive electrode plate without the active substance, and the second tab may be a negative electrode tab formed by the portion of the negative electrode plate without the active substance. Alternatively, the first tab 131 may be a negative electrode tab formed by the portion of the negative electrode plate without the active substance, and the second tab may be a positive electrode tab formed by the portion of the positive electrode plate without the active substance.

The current collecting member 14 being configured to connect the first tab 131 to the electrode terminal 12 means that both the first tab 131 and the electrode terminal 12 are connected to the current collecting member 14 so that the first tab 131 is electrically connected to the electrode terminal 12 through the current collecting member 14.

Further, a projection of the protrusion 151 on the current collecting member 14 does not overlap a projection of the electrode terminal 12 on the current collecting member 14, which means that the protrusion 151 is offset from the electrode terminal 12.

In the battery cell 10 of this application, with the protrusion 151 formed on the side of the first insulating member 15 facing the current collecting member 14, the protrusion 151 can limit warping of the current collecting member 14 toward the wall portion 11a during a process of placing the electrode assembly 13 into the housing, thereby limiting the deformation of the electrode assembly 13 toward the wall portion 11a to prevent a short circuit and thermal runaway in the battery cell 10 caused by misalignment of the electrode plate of the electrode assembly 13 and improving the safety of the battery cell 10.

In addition, the first insulating member 15 also insulates and isolates the current collecting member 14 from the wall portion 11a. With the same first insulating member 15 to implement different functions, the number of parts is reduced, making the structure of the battery cell 10 compact.

As shown in FIG. 4, in some embodiments of this application, the current collecting member 14 includes a central portion 141 and a peripheral portion 142, the projection of the electrode terminal 12 on the current collecting member 14 is located in the central portion 141, and the projection of the protrusion 151 on the current collecting member 14 is located in the peripheral portion 142.

As shown in FIG. 4, the peripheral portion 142 is disposed around the central portion 141. In an example in which the electrode assembly 13 is a wound structure, projections of the electrode plate and separator in the inner circle of the electrode assembly 13 on the current collecting member 14 are located in the central portion 141, and projections of the electrode plate and separator in the outer circle of the electrode assembly 13 on the current collecting member 14 are located in the peripheral portion 142. When the electrode assembly 13 is placed into the housing 11, with the protrusion 151 abutting against the peripheral portion 142, the peripheral portion 142 is prevented from warping toward the wall portion 11a, which in turn prevents the electrode plate and separator in the outer circle of the electrode assembly 13 from moving toward the wall portion 11a, avoiding misalignment of the electrode plate and reducing the risk of short circuit and thermal runaway in the battery cell.

In such an arrangement, during the process of placing the electrode assembly 13 into the housing 11, the electrode terminal 12 abuts against the central portion 141 and the protrusion 151 can abut against the peripheral portion 142 to limit and support the peripheral portion 142 and restrict the peripheral portion 142 from warping toward the wall portion 11a, thereby limiting misalignment of the electrode plate in the outer circle of the electrode assembly 13 to prevent a short circuit and thermal runaway in the battery cell 10 and improving the safety of the battery cell 10.

As shown in FIG. 4, in some embodiments of this application, in a radial direction of the electrode terminal 12, a minimum distance from the protrusion 151 to the outer peripheral surface of the current collecting member 14 is less than a minimum distance from the protrusion 151 to the outer peripheral surface of the electrode terminal 12.

It should be noted that the minimum distance from the protrusion 151 to the outer peripheral surface of the current collecting member 14 being less than the minimum distance from the protrusion 151 to the outer peripheral surface of the electrode terminal 12 means that the minimum distance from a protrusion 151 to the outer peripheral surface of the current collecting member 14 is less than the minimum distance from the same protrusion 151 to the outer peripheral surface of the electrode terminal 12. After determining a position of the protrusion 151 formed on the first insulating member 15 and a shape of the protrusion 151, the minimum distance from the protrusion 151 to the outer peripheral surface of the current collecting member 14 is less than the minimum distance from the protrusion 151 to the outer peripheral surface of the electrode terminal 12.

In such an arrangement, the electrode plate in the outer circle of the electrode assembly 13 has a high probability of misalignment and a large amount of misalignment, the protrusion 151 being disposed closer to the outer peripheral surface of the current collecting member 14 and farther away from the outer peripheral surface of the electrode terminal 12 enables the protrusion 151 to limit and support the electrode plate farther away from the electrode terminal 12, that is, the electrode plate in the outer circle, reduces the probability of misalignment of the electrode plate in the outer circle, prevents a short circuit and thermal runaway in the battery cell 10 caused by misalignment of the electrode plate in the outer circle, and improves the safety of the battery cell 10.

As shown in FIG. 5, FIG. 5 is a locally enlarged view of position A according to some embodiments of this application. In some embodiments of this application, a gap is present between the protrusion 151 and the current collecting member 14 in the thickness direction of the wall portion 11a.

If the protrusion 151 abuts against the current collecting member 14, during the process of placing the electrode assembly 13 into the housing, the protrusion 151 generates a force facing away from the wall portion 11a in the axial direction of the electrode assembly 13 on the current collecting member 14 and the electrode assembly 13, increasing the difficulty of placing the electrode assembly 13 into the housing and reducing the production efficiency of the battery cell 10.

Further, if the protrusion 151 abuts against the current collecting member 14, when the size of the protrusion 151 in the thickness direction of the wall portion 11a is too large, the protrusion 151 abutting against the current collecting member 14 may cause a gap between the current collecting member 14 and the electrode terminal 12, which in turn affects the stability of the electrical connection between the current collecting member 14 and the electrode terminal 12. Therefore, a gap may be present between the protrusion 151 and the current collecting member 14 to eliminate the influence of the protrusion 151 caused by factors such as manufacturing errors.

In such an arrangement, the electrode terminal 12 needs to abut against the current collecting member 14 for electrical connection, so provision of a gap between the protrusion 151 and the current collecting member 14 can prevent the protrusion 151 from interfering with the connection between the electrode terminal 12 and the current collecting member 14, ensuring the stability of the electrical connection between the electrode terminal 12 and the current collecting member 14.

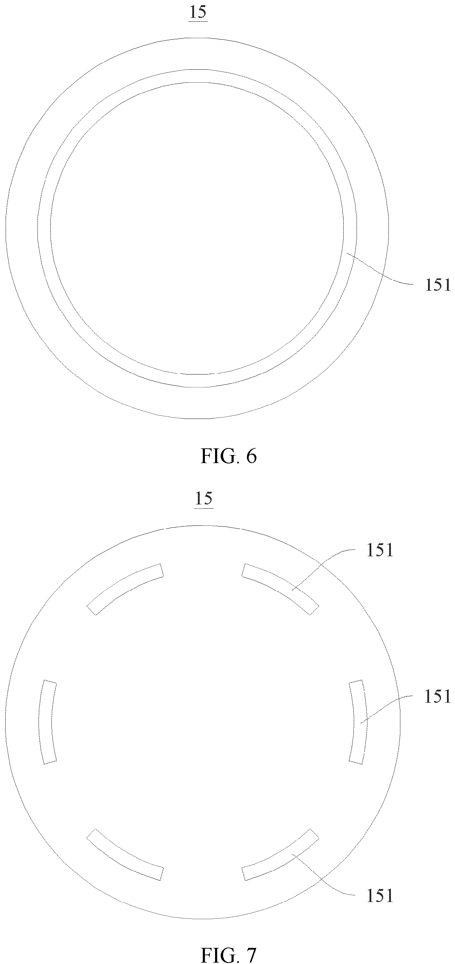

As shown in FIG. 6 and FIG. 7, FIG. 6 is a schematic diagram of a first insulating member with an annular protrusion formed according to some embodiments of this application, and FIG. 7 is a schematic diagram of a first insulating member with a plurality of protrusions formed according to some embodiments of this application. In some embodiments of this application, the protrusion 151 is an annular protrusion 151 disposed around the central axis of the electrode terminal 12; or the protrusions 151 are provided in plurality and the plurality of protrusions 151 are spaced apart around the central axis of the electrode terminal 12.

As shown in FIG. 6, in some embodiments of this application, the protrusions 151 is an annular protrusion 151 disposed around the central axis of the electrode terminal 12. The annular protrusion 151 is not limited to a circular ring. The annular protrusion 151 may alternatively be oval, square, polygonal, or the like, as long as the annular protrusion 151 forms a closed ring around the central axis of the electrode terminal 12.

As shown in FIG. 7, in some embodiments of this application, the protrusions 151 are provided in plurality, and the plurality of protrusions 151 are spaced apart around the central axis of the electrode terminal 12. The plurality of protrusions 151 being spaced apart around the central axis of the electrode terminal 12 may be that the plurality of protrusions 151 are spaced apart around the central axis of the electrode terminal 12 in a same circumference or that the plurality of protrusions 151 are spaced apart around the central axis of the electrode terminal 12 in different circumferences. For example, a portion of the plurality of protrusions 151 are spaced apart around the central axis of the electrode terminal 12 in a first circumference, and another portion of the plurality of protrusions 151 are spaced apart around the central axis of the electrode terminal 12 in a second circumference. The diameter of the first circumference is different from the diameter of the second circumference, and the number of protrusions 151 located in the first circumference may be the same as or different from the number of protrusions 151 located in the second circumference.

When the protrusions 151 are provided in plurality, the shape of the protrusions 151 may be cylindrical, prismatic, fan-shaped, fan ring, or the like.

It should be noted that the specific shape and number of the protrusions 151 are not limited in this application, as long as the protrusions 151 provided can provide a force in the axial direction of the electrode assembly 13 on the current collecting member 14 and the electrode plate and separator of the electrode assembly 13 to prevent misalignment of the electrode plate.

Optionally, in some embodiments of this application, when the protrusions 151 are provided in plurality, a projection area on the current collecting member 14 is larger for the protrusions 151 away from the electrode terminal 12, and a projection area on the current collecting member 14 is smaller for the protrusions 151 close to the electrode terminal 12. Because the electrode terminal 12 can provide support to the electrode plate of the electrode assembly 13 close to the electrode terminal 12 to some extent, but cannot provide support to the electrode plate of the electrode assembly 13 away from the electrode terminal 12, it is necessary to provide more support to the electrode plate of the electrode assembly 13 away from the electrode terminal 12 to prevent misalignment of the electrode plate of the electrode assembly 13 away from the electrode terminal 12. Accordingly, the projection area of the protrusion 151 on the current collecting member 14 away from the electrode terminal 12 can be arranged larger, so as to stably support the electrode plate away from the electrode terminal 12.

Optionally, in some embodiments of this application, when the protrusions 151 are provided in plurality, the protrusions 151 away from the electrode terminal 12 are denser and the protrusions 151 close to the electrode terminal 12 are sparser. Similarly, because the electrode terminal 12 can provide support to the electrode plate of the electrode assembly 13 close to the electrode terminal 12 to some extent, but cannot provide support to the electrode plate of the electrode assembly 13 away from the electrode terminal 12, it is necessary to provide more support to the electrode plate of the electrode assembly 13 away from the electrode terminal 12 to prevent misalignment of the electrode plate of the electrode assembly 13 away from the electrode terminal 12. Accordingly, the protrusions 151 away from the electrode terminal 12 can be arranged more densely, so as to stably support the electrode plate away from the electrode terminal 12.

In such an arrangement, in an embodiment in which the protrusion 151 is an annular protrusion 151 disposed around the central axis of the electrode terminal 12, the annular protrusion 151 plays the roles of limiting and supporting the electrode plate and separator in the outer circle of the electrode assembly 13 relatively uniformly, and the problem of misalignment of the electrode plate at a local position is not likely to occur. In an embodiment in which the protrusions 151 are provided in plurality and the plurality of protrusions 151 are spaced apart around the central axis of the electrode terminal 12, the manner in which the plurality of protrusions 151 are spaced apart around the central axis of the electrode terminal 12 reduces the material used for the first insulating member 15 and reduces the difficulty of forming the first insulating member 15.

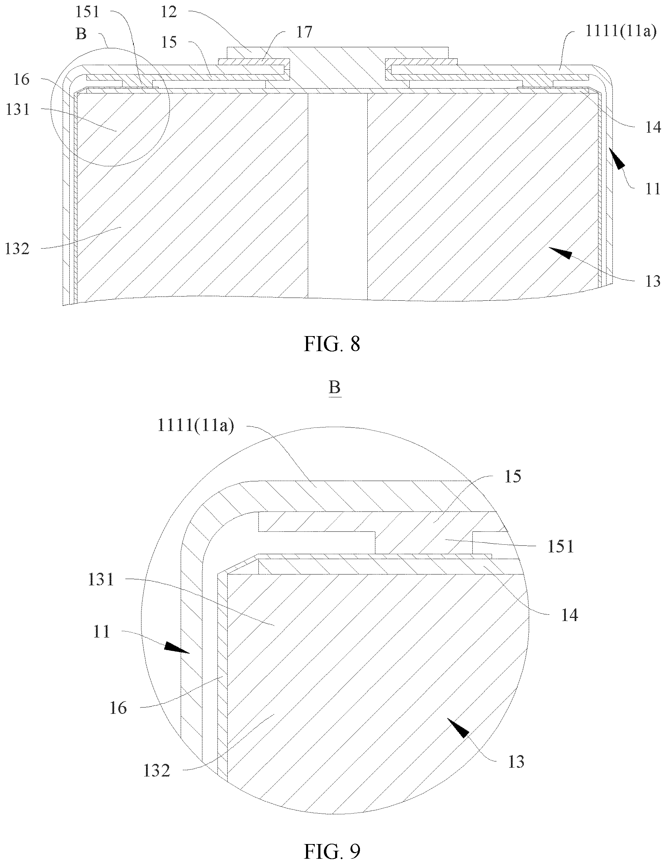

As shown in FIG. 8 and FIG. 9, FIG. 8 is a schematic diagram of an insulating film covering outer peripheral surfaces of a first tab and a body according to an embodiment of this application, and FIG. 9 is a locally enlarged view of position B according to some embodiments of this application. In some embodiments of this application, the battery cell 10 further includes an insulating film 16. The insulating film 16 covers outer peripheral surfaces of a first tab 131 and a body 132 and extends between the protrusion 151 and the current collecting member 14.

To further reduce the risk of short circuit in the battery cell 10, the outer peripheral surfaces of both the first tab 131 and the body 132 need to be insulated and isolated from the housing 11. Therefore, with the insulating film 16 covering the outer peripheral surfaces of the first tab 131 and the body 132, insulating and isolating the outer peripheral surfaces of the first tab 131 and the body 132 from the housing 11 can be implemented.

As shown in FIG. 9, in an embodiment in which a gap is present between the protrusion 151 and the current collecting member 14 in the thickness direction of the wall portion 11a, the first insulating member 15 is not in contact with the current collecting member 14. Using only the first insulating member 15 to insulate and isolate the current collecting member14 from the wall portion 11a is less effective, as there is still a risk of short circuit between the current collecting member 14 and the wall portion 11a. For example, there may be a short circuit between the outer peripheral surface of the current collecting member 14 and the wall portion 11a. To further improve the effect of insulating and isolating the current collecting member 14 from the wall portion 11a and prevent a short circuit between the current collecting member 14 and the wall portion 11a, the insulating film 16 can extend between the protrusion 151 and the current collecting member 14, so that the insulating film 16 can cover the current collecting member 14, improving the effect of insulating and isolating the current collecting member 14 from the wall portion 11a.

As shown in FIG. 9, when the insulating film 16 extends between the protrusion 151 and the current collecting member 14, if a gap is present between the protrusion 151 and the current collecting member 14 in the thickness direction of the wall portion 11a, the insulating film 16 can fill the gap, and the protrusion 151 can abut against the insulating film 16, that is, the protrusion 151 and the current collecting member 14 can clamp and compress the insulating film 16 to prevent the insulating film 16 from being disturbed by external factors and moving uncontrollably, so that the insulating film 16 can stably cover the current collecting member 14, the first tab 131 and the body 132.

In such an arrangement, with the insulating film 16 covering the outer peripheral surfaces of the first tab 131 and the body 132, the first tab 131 and the body 132 are insulated and isolated from the housing 11, reducing the probability of short circuit between the first tab 131 and the housing 11 and between the body 132 and the housing 11, thereby reducing the risk of short circuit in the battery cell 10 and improving the safety of the battery cell 10. In addition, the insulating film 16 extends between the protrusion 151 and the current collecting member 14 so that the protrusion 151 and the current collecting member 14 can clamp and compress the insulating film 16 to prevent the insulating film 16 from moving uncontrollably, improving the stability of the insulating film 16 covering the current collecting member 14, the first tab 131, and the body 132.

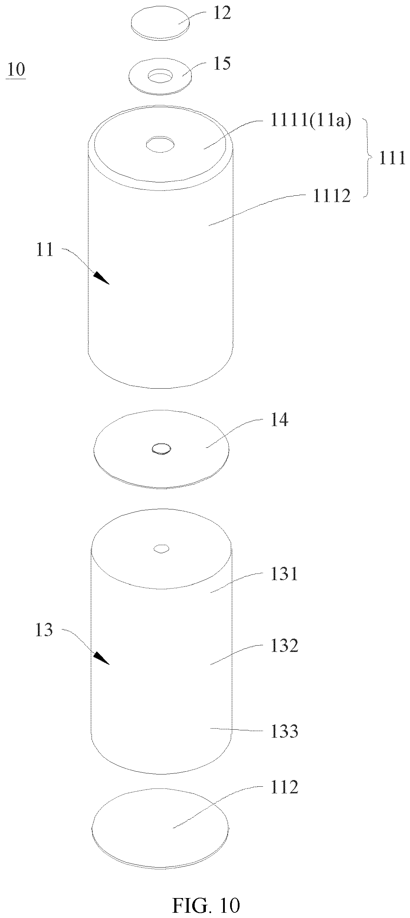

As shown in FIG. 10, FIG. 10 is a schematic diagram of a battery cell 10 according to some embodiments of this application. In some embodiments of this application, the housing 11 includes a housing body 111 and an end cover 112, where the housing body 111 includes a bottom wall 1111 and a side wall 1112, the side wall 1112 encloses around the bottom wall 1111, one end of the side wall 1112 is connected to the bottom wall 1111, the other end of the side wall 1112 encloses an opening opposite the bottom wall 1111, the end cover 112 covers the opening, and the wall portion 11a is the bottom wall 1111 or the end cover 112.

The bottom wall 1111 and the side wall 1112 may be integrally formed, or the bottom wall 1111 and the side wall 1112 may alternatively be provided separately and connected by welding, clamping, or the like. Specifically, the side wall 1112 may be columnar in shape, such as a cylinder or prism.

The other end of the side wall 1112 opposite the bottom wall 1111 encloses an opening, and the current collecting member 14 and the electrode assembly 13 can be placed into the housing body 111 through the opening. After placing the electrode assembly 13 into the housing body 111, the opening is covered by the end cover 112 to close the opening. Further, an electrolyte needs to be injected into the housing 11. When the opening is covered by the end cover 112, a sealing member such as a sealing ring or a sealing gasket may be provided between the end cover 112 and the side wall 1112 to improve the sealing of the end cover 112 covering the opening and prevent the electrolyte from leaking from the housing 11.

There are two cases in which the wall portion 11a is the bottom wall 1111 or the end cover 112. One case is that the wall portion 11a is the bottom wall 1111; and the other case is that the wall portion 11a is the end cover 112. In an embodiment in which the wall portion 11a is the bottom wall 1111, the electrode assembly 13 is placed into the housing body 111 with the current collecting member 14 facing the bottom wall 1111 and the heat shrink film 15 located between the bottom wall 1111 and the current collecting member 14. In an embodiment in which the wall portion 11a is the end cover 112, the electrode assembly 13 is placed into the housing body 111 with the current collecting member 14 facing the end cover 112 and the heat shrink film 15 located between the end cover 112 and the current collecting member 14.

In such an arrangement, the bottom wall 1111 and the side wall 1112 define a space for accommodation of the electrode assembly 13, electrolyte, and other structures, and the end cover 112 is used to cover the opening enclosed by the side wall 1112, ensuring the sealing of the housing 11.

As shown in FIG. 10, in some embodiments of this application, the electrode assembly 13 further includes a second tab 133. The second tab 133 is formed at an end of the body 132 farther away from the wall portion 11a. The second tab 133 and the first tab 131 have opposite polarities, and the second tab 133 is electrically connected to the wall portion 11a.

As shown in FIG. 10, the first tab 131 is located at an end of the electrode assembly 13 facing the wall portion 11a, and the second tab 133 is located at an end of the electrode assembly 13 farther away from the wall portion 11a. To be specific, the first tab 131 and the second tab 133 are formed at two ends of the body 132 of the electrode assembly 13 respectively.

The first tab 131 and the second tab 133 have opposite polarities. For example, the first tab 131 is a positive electrode tab of the electrode assembly 13, composed of a portion of a positive electrode plate without active substance and electrically connected to the current collecting member 14 and the electrode terminal 12; and the second tab 133 is a negative electrode tab of the electrode assembly 13, composed of a portion of a negative electrode plate without active substance and electrically connected to the housing 11 and the wall portion 11a.

In such an arrangement, the first tab 131 and the second tab 133 are located at two ends of the electrode assembly 13, and good insulation is provided between the first tab 131 and the second tab 133, reducing the risk of short circuit in the battery cell 10 and improving the safety of the battery cell 10.

According to a second aspect, this application further provides a battery 100. The battery 100 includes the foregoing battery cells 10. In the battery cell 10, the protrusion 151 is formed on the side of the first insulating member 15 facing the current collecting member 14, so as to support the electrode plate of the electrode assembly 13. In this way, the probability of misalignment of the electrode plate during the process of placing the electrode assembly 13 into the housing is reduced, and the risk of short circuit and thermal runaway in the battery cell 10 is reduced, thereby improving the safety of the battery 100.

According to a third aspect, this application further provides an electric apparatus. The electric apparatus includes the foregoing battery 100, and the battery 100 is configured to supply electrical energy.

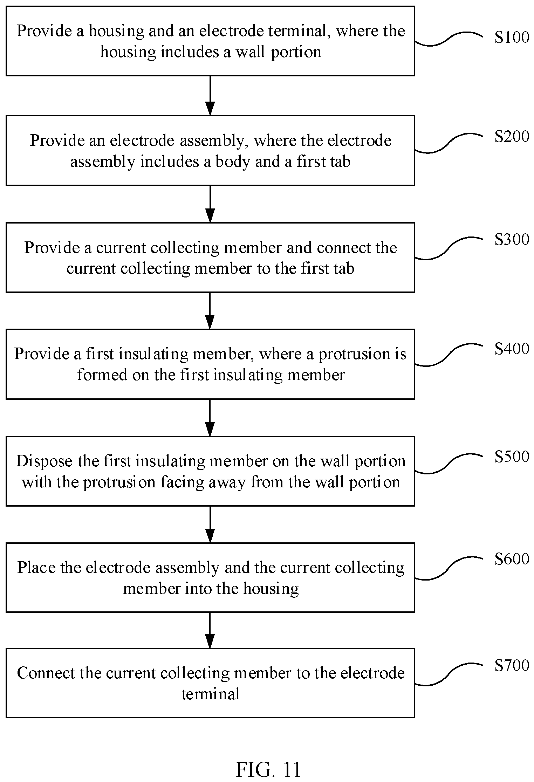

According to a fourth aspect, as shown in FIG. 11, FIG. 11 is a schematic diagram of a manufacturing method of battery cell according to some embodiments of this application. This application further provides a manufacturing method of battery cell 10. Specifically, the manufacturing method of battery cell 10 is as follows:
S100. Provide a housing 11 and an electrode terminal 12, where the housing 11 includes a wall portion 11a, and the electrode terminal 12 is mounted on the wall portion 11a in an insulating manner;
S200. Provide an electrode assembly 13, where the electrode assembly 13 includes a body 132 and a first tab 131, the first tab 131 being formed at an end of the body 132 closer to the wall portion 11a;
S300. Provide a current collecting member 14 and connect the current collecting member 14 to the first tab 131;
S400. Provide a first insulating member 15, where a protrusion 151 is formed on a side of the first insulating member 15 facing the current collecting member 14, and in a thickness direction of the wall portion 11a, a projection of the protrusion 151 on the current collecting member 14 does not overlap a projection of the electrode terminal 12 on the current collecting member 14;
S500. Dispose the first insulating member 15 on the wall portion 11a with the protrusion 151 facing away from the wall portion 11a;
S600. Place the electrode assembly 13 and the current collecting member 14 into the housing 11; and
S700. Connect the current collecting member 14 to the electrode terminal 12.

It should be noted that the foregoing manufacturing method of battery cell 10 is merely intended to illustrate the production process of battery cell 10 and does not represent the specific sequence of steps in the production process of battery cell 10. In the production process of battery cell 10, specific processes can be developed based on an actual situation.

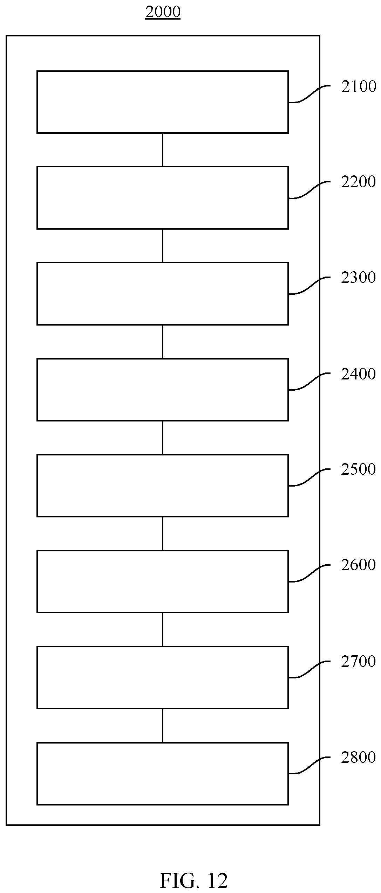

According to a fifth aspect, as shown in FIG. 12, FIG. 12 is a schematic diagram of a manufacturing device of battery cell according to some embodiments of this application. This application further provides a manufacturing device 2000 of battery cell, the manufacturing device 2000 of battery cell includes a first providing means 2100, a second providing means 2200, a third providing means 2300, a fourth providing means 2400, a first assembly means 2500, a second assembly means 2600, a third assembly means 2700, and a fourth assembly means 2800.

Specifically, the first providing means 2100 is configured to provide a housing 11 and an electrode terminal 12, where the housing 11 includes a wall portion 11a, and the electrode terminal 12 is mounted on the wall portion 11a in an insulating manner. The second providing means 2200 is configured to provide an electrode assembly 13, where the electrode assembly 13 includes a body 132 and a first tab 131, the first tab 131 being formed at an end of the body 132 closer to the wall portion 11a. The third providing means 2300 is configured to provide a current collecting member 14. The fourth providing means 2400 is configured to provide a first insulating member 15, where a protrusion 151 is formed on a side of the first insulating member 15 facing the current collecting member 14, and in a thickness direction of the wall portion 11a, a projection of the protrusion 151 on the current collecting member 14 does not overlap a projection of the electrode terminal 12 on the current collecting member 14. The first assembly means 2500 is configured to connect the current collecting member 14 to the first tab 131. The second assembly means 2600 is configured to dispose the first insulating member 15 on the wall portion 11a with the protrusion 151 facing away from the wall portion 11a. The third assembly means 2700 is configured to place the electrode assembly 13 and the current collecting member 14 into the housing 11. The fourth assembly means 2800 is configured to connect the current collecting member 14 to the electrode terminal 12.

In some embodiments of this application, as shown in FIG. 3 to FIG. 9, this application provides a battery cell 10. The battery cell 10 includes a housing 11, an electrode terminal 12, an electrode assembly 13, a current collecting member 14, and a first insulating member 15. The housing 11 includes a wall portion 11a, and the electrode terminal 12 is mounted on the wall portion 11a in an insulating manner. The electrode assembly 13 is disposed in the housing 11. The electrode assembly 13 includes a body 132 and a first tab 131, the first tab 131 being formed at an end of the body 132 closer to the wall portion 11a. The current collecting member 14 is disposed between the electrode assembly 13 and the wall portion 11a. The current collecting member 14 is configured to connect the first tab 131 to the electrode terminal 12. The first insulating member 15 is disposed between the current collecting member 14 and the wall portion 11a and is configured to insulate and isolate the current collecting member 14 from the wall portion 11a. A protrusion 151 is formed on a side of the first insulating member 15 facing the current collecting member 14, and in the thickness direction of the wall portion 11a, a projection of the protrusion 151 on the current collecting member 14 does not overlap a projection of the electrode terminal 12 on the current collecting member 14. The projection of the protrusion 151 on the current collecting member 14 is located in a peripheral portion 142, the projection of the electrode terminal 12 on the current collecting member 14 is located in a central portion 141, and a minimum distance from the protrusion 151 to an outer peripheral surface of the current collecting member 14 is less than a minimum distance from the protrusion 151 to an outer peripheral surface of the electrode terminal 12. A gap is present between the protrusion 151 and the current collecting member 14. The outer peripheral surfaces of the first tab 131 and the body 132 of the electrode assembly 13 are covered by an insulating film 16, and the insulating film extends between the protrusion 151 and the current collecting member 14.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery cell, comprising:
a housing comprising a wall portion;
an electrode terminal mounted on the wall portion in an insulating manner;
an electrode assembly disposed in the housing, wherein the electrode assembly comprises a body and a first tab, the first tab being formed at an end of the body closer to the wall portion;
a current collecting member disposed between the first tab and the wall portion and configured to connect the first tab to the electrode terminal; and
a first insulating member disposed between the current collecting member and the wall portion for insulating and isolating the current collecting member from the wall portion;
wherein a protrusion is formed on a side of the first insulating member facing the current collecting member, and in a thickness direction of the wall portion, a projection of the protrusion on the current collecting member does not overlap a projection of the electrode terminal on the current collecting member.

2. The battery cell according to claim 1, wherein the current collecting member comprises a central portion and a peripheral portion, the projection of the electrode terminal on the current collecting member is located in the central portion, and the projection of the protrusion on the current collecting member is located in the peripheral portion.

3. The battery cell according to claim 1 or 2, wherein in a radial direction of the electrode terminal, a minimum distance from the protrusion to an outer peripheral surface of the current collecting member is less than a minimum distance from the protrusion to an outer peripheral surface of the electrode terminal.

4. The battery cell according to any one of claims 1 to 3, wherein a gap is present between the protrusion and the current collecting member in the thickness direction of the wall portion.

5. The battery cell according to any one of claims 1 to 4, wherein the protrusion is an annular protrusion disposed around the central axis of the electrode terminal; or
the protrusions are provided in plurality and the plurality of protrusions are spaced apart around the central axis of the electrode terminal.

6. The battery cell according to any one of claims 1 to 5, wherein the battery cell further comprises an insulating film, the insulating film covering outer peripheral surfaces of the first tab and the body and extending between the protrusions and the current collecting member.

7. The battery cell according to any one of claims 1 to 6, wherein the housing comprises a housing body and an end cover, wherein the housing body comprises a bottom wall and a side wall, the side wall encloses around the bottom wall, one end of the side wall is connected to the bottom wall, the other end of the side wall encloses an opening opposite the bottom wall, the end cover covers the opening, and the wall portion is the bottom wall or the end cover.

8. The battery cell according to any one of claims 1 to 7, wherein the electrode assembly further comprises a second tab, wherein the second tab is formed at an end of the body farther away from the wall portion, the second tab and the first tab have opposite polarities, and the second tab is electrically connected to the wall portion.

9. A battery comprising the battery cell according to any one of claims 1 to 8.

10. An electric apparatus comprising the battery according to claim 9, wherein the battery is configured to supply electrical energy.

11. A manufacturing method of battery cell, comprising:
providing a housing and an electrode terminal, wherein the housing comprises a wall portion, and the electrode terminal is mounted on the wall portion in an insulating manner;
providing an electrode assembly, wherein the electrode assembly comprises a body and a first tab, the first tab being formed at an end of the body closer to the wall portion;
providing a current collecting member and connecting the current collecting member to the first tab;
providing a first insulating member, wherein a protrusion is formed on a side of the first insulating member facing the current collecting member, and in a thickness direction of the wall portion, a projection of the protrusion on the current collecting member does not overlap a projection of the electrode terminal on the current collecting member;
disposing the first insulating member on the wall portion with the protrusion facing away from the wall portion;
placing the electrode assembly and the current collecting member into the housing; and
connecting the current collecting member to the electrode terminal.

12. A manufacturing device of battery cell, comprising:
a first providing means configured to provide a housing and an electrode terminal, wherein the housing comprises a wall portion, and the electrode terminal is mounted on the wall portion in an insulating manner;
a second providing means configured to provide an electrode assembly, wherein the electrode assembly comprises a body and a first tab, the first tab being formed at an end of the body closer to the wall portion;
a third providing means configured to provide a current collecting member;
a fourth providing means configured to provide a first insulating member, wherein a protrusion is formed on a side of the first insulating member facing the current collecting member, and in a thickness direction of the wall portion, a projection of the protrusion on the current collecting member does not overlap a projection of the electrode terminal on the current collecting member;
a first assembly means configured to connect the current collecting member to the first tab;
a second assembly means configured to dispose the first insulating member on the wall portion with the protrusion facing away from the wall portion;
a third assembly means configured to place the electrode assembly into the housing; and
a fourth assembly means configured to connect the current collecting member to the electrode terminal.
